Europäisches Patentamt

European Patent Office

Office européen des brevets

(11) Veröffentlichungsnummer: **0 253 991**
**A2**

(12) **EUROPÄISCHE PATENTANMELDUNG**

(21) Anmeldenummer: 87107537.0

(22) Anmeldetag: 23.05.87

(51) Int. Cl.⁴: **G02B 27/34**

(30) Priorität: 23.07.86 DE 3624821

(43) Veröffentlichungstag der Anmeldung:
27.01.88 Patentblatt 88/04

(84) Benannte Vertragsstaaten:
BE DE ES FR GB IT

(71) Anmelder: **Messerschmitt-Bölkow-Blohm Gesellschaft mit beschränkter Haftung Robert-Koch-Strasse D-8012 Ottobrunn(DE)**

(72) Erfinder: **Riedl, Günther Am Anger 5 D-8195 Egling(DE)**

(54) **Anordnung zur Erzeugung eines beleuchteten Fadenkreuzes.**

(57) Die Erfindung bezieht sich auf eine Anordnung zur Erzeugung eines beleuchteten Fadenkreuzes im Strahlengang einer IR-Quelle mit der in einfacher Weise deckungsgleiche Fadenkreuze in zwei verschiedenen Wellenlängenbereichen erzeugt werden können.

BELEUCHTUNG 2µm

BELEUCHTUNG 10µm

STRAHLENGANG DER ABBILDUNG

FIG. 2

EP 0 253 991 A2

## Anordnung zur Erzeugung eines beleuchteten Fadenkreuzes.

Die Erfindung bezieht sich auf eine Anordnung zur Erzeugung eines beleuchteten Fadenkreuzes, Strichmusters oder Leuchtpunktes im IR-Strahlengang eines Objektkives.

Durch die DE-PS 26 54 151 ist ein Tag-und Nachtsichtgerät zum Lenken von Flugkörpern bekannt geworden, bei dem durch ein Wärmebildgerät mit einem Infrarotdetektor, einer Beobachtungseinrichtung und einem thermischen Fadenkreuz eine Flugkörperlenkung auch bei Nacht ermöglicht wird. Diese Ausführungsform erfordert also für den Tagsichtbereich und für den IR-Bereich je ein eigenes Fadenkreuz in zwei verschiedenen Geräten, nämlich in einem Tageslichtzielgerät und in einem Infrarotzielgerät. Das für letzteres verwendete Fadenkreuz wird als thermisches Muster ausgebildet und zwar durch kreuzförmig angeordnete Heizwiderstände, die in ihrer Lage mit dem optischen Fadenkreuz übereinstimmen. Der apparative, montagemäßige und operative Aufwand ist hier viel zu groß.

Durch die DE-OS 33 38 928 der Anmelderin ist ebenfalls ein Tag-und Nachtsichtgerät bekannt geworden, bei dem einem Tagsichtgerät ein Wärmebildgerät und eine Kathodenstrahlröhre zugeordnet sind. In diesem Gerät wird das Fadenkreuz elektronisch oder im Wärmebildgerät erzeugt und auf den Bildschirm der Kathodenstrahlröhre darggestellt bzw. darauf übertragen. Da das elektronisch erzeugte Fadenkreuz in allen Teilen dieses Tag/Nachtsichtgerätes erkennbar ist, fallen die bisher aufgetretenen Achsharmonisierungsprobleme fort. Jedoch auch hier ist der Aufwand an Bauteilen, Bedienung und Dimensionierung zu groß.

Der vorliegenden Erfindung liegt die Aufgabe zugrunde, eine Anordnung der eingangs genannten Art zu schaffen, die nicht nur die Nachteile des Standes der Technik weitgehend beseitigt, sondern eine einfache, platzsparende und zuverlässige Einrichtung zur Parallelausrichtung von Achsen optronischer Geräte bildet und in zwei verschiedenen IR-Wellenlängenbereichen gleichzeitig arbeiten kann.

Diese Aufgabe wird durch die im Anspruch 1 aufgezeigten Maßnahmen in überraschend einfacher Weise gelöst. In den Unteransprüchen sind weitere Ausgestaltungen angegeben und in der nachfolgenden Beschreibung werden Ausführungsbeispiele erläutert und in den Figuren der Zeichnung skizziert. Es zeigen:

Fig. 1 eine Schemaskizze des IR-Strahlenganges unterschiedlicher Wellenlängen mit den jeweils entsprechenden Zwischenbildebenen,

Fig. 2 ein Ausführungsbeispiel, das eine speziell scharfe Abbildung des Fadenkreuzes gewährleistet.

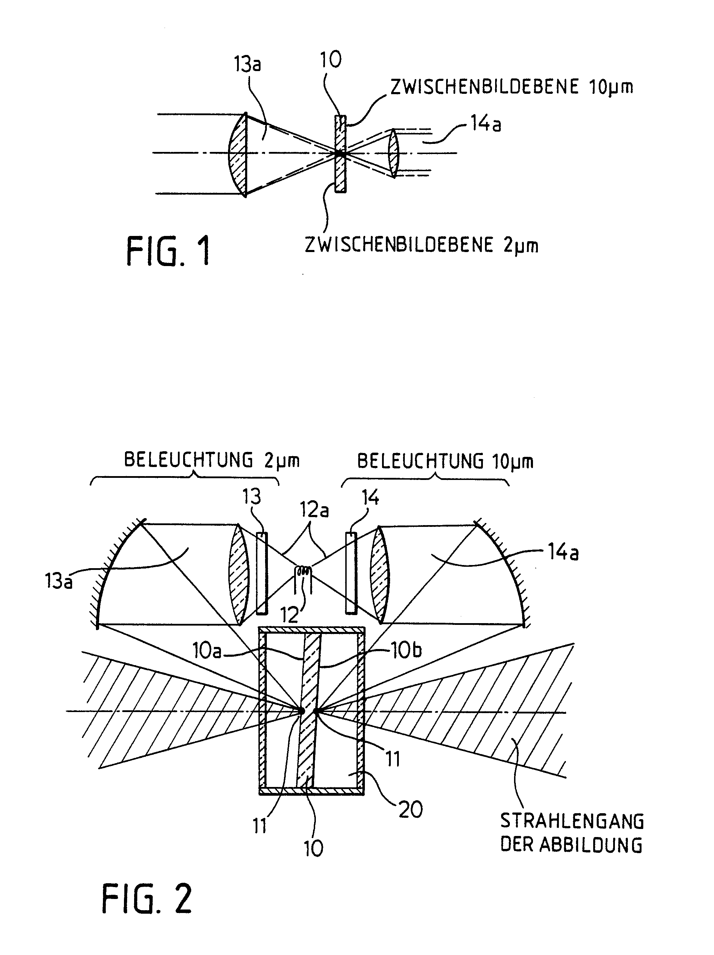

Meistens arbeitet das Infrarotlicht einer IR-Quelle in einem breitbandigen Bereich, beispielsweise im Wellenlängenbereich 2 $\mu$m bis 10 $\mu$m. Ist nun, wie bei der vorliegenden Erfindung, die Aufgabe gestellt, in zwei verschiedenen Wellenlängenbereichen zu arbeiten, d.h. zwei deckungsgleiche Fadenkreuze in zwei unterschiedlichen Wellenlängenbereichen zu erzeugen, so muß das Problem der durch die Dispersion der verwendeten optischen Materialien erzeugten Lageunterschiedlichkeit der beiden zur Deckung zu bringenden Fadenkreuze, Strichmuster oder Punkte 11 bereinigt werden. Dieses Problem ist auf die unterschiedlichen, sich ergebenden Brennweiten der verwendeten Linsen 13a, 14 zurückzuführen. Wie die Fig. 1 veranschaulicht, ist die Brennweite der verwendeten Linsen 13a, 14a im allgemeinen bei kürzeren Wellenlängen kürzer als bei längeren, so daß die Zwischenbildebene bei 2$\mu$m näher an die Eintrittslinse 13a liegt als bei 10 $\mu$m. Diese Tatsache macht sich die Erfindung zunutze, indem nun vorgeschlagen wird, auf einer IR-transparenten Platte 10 durch Ätzen oder Gravur ein Fadenkreuz, Strichmuster oder Punkt 11 auf jeder Seitenfläche 10a bzw. 10b der transparenten Platte 10 aufzubringen, wobei die Dicke der Platte 10 der Lagedifferenz der Zwsichenbildebenen entsprechend der beiden gewünschten Wellenlängenbereiche entspricht. In dem hier beschriebenen Ausführungsbeispiel ist von den Wellenbereichen 2$\mu$m und 10$\mu$m ausgegangen worden. Es ist aber jede andere Bereichspaarung möglich, lediglich die Dicke der Trägerplatte des Fadenkreuzes etc. ist entsprechend anzupassen, was bei den jeweils bekannten Brennweiten der verwendeten Objektive bzw. optischen Glieder kein Problem ist. Das Fadenkreuz 11 beider Plattenseiten 10a, 10b wird von einer IR-Quelle entweder diffus oder abbildend beleuchtet und das von den Mustern ausgehende Streulicht wird auf dem Detektor abgebildet bzw. nach außen abgestrahlt, wobei beide Fadenkreuze etc. deckungsgleich erzeugt werden.

In der Figur 2 ist ein weiteres Ausführungsbeispiel gezeigt, das die Probleme berücksichtigt, die dadurch entstehen können, daß die Oberflächen der Platte 10 verschmutzen bzw. verstauben und die schafe Abbildung dieser Partikel störend wirkt. Um diesen Mangel zu beheben, wird vorgeschlagen, die das Fadenkreuz etc. tragende Platte 10 in einem staubdichten Fensterrahmen 20 bzw. vitrinenartigen Raum unterzubringen und zwar außerhalb des direkten IR-Strahles 12a der IR-Lichtquelle 12. In diesen Strahlengang 12a werden dem gewünschten Wellenlängenbereich - hier 2μm und 10μm -die entsprechenden Objektive und Umlenkspiegel 13a, 14a positioniert, von wo die in der Wellenlänge unterschiedlichen IR-Strahlen auf das ihnen zugeordnete Fadenkreuz 11 gelenkt werden.

Somit ist eine Anordnung geschaffen, mit der in zwei verschiedenen IR-Wellenlängenbereichen deckungsgleiche Fadenkreuze erzeugt werden können.

Durch die Lage der Platte in die 10μ-Zwischenbildebene wird über die nie ganz zu vermeidende Oberflächenreflexion den Detektor in sich selbst abgebildet, was zu einem sogenannten Narziss-Bild führen kann. Durch Schrägstellen der Platte zur optischen Achse läßt sich dieser Effekt vermeiden.

**Ansprüche**

1. Anordnung zur Erzeugung eines beleuchteten Fadenkreuzes, Strichmusters oder Leuchtpunktes im IR-Strahlengang eines Objektives, dadurch **gekennzeichnet,** daß auf einer IR-transparenten Platte (10), beispielsweise durch Ätzen oder Gravur, ein Fadenkreuz, Strichmuster oder Leuchtpunkt (11) aufgebracht wird und zur Erzeugung von deren Deckungsgleichheit in zwei verschiedenen Wellenlängenbereichen auf jeder Seitenfläche (10a, 10b) der transparenten Platte (10) dasselbe des jeweils ausgewählten Musters (11) aufgebracht ist, wobei die Dicke der Platte (10) der Lagedifferenz der Zwischenbildebenen der beiden Wellenlängenbereiche entspricht.

2. Anordnung nach Anspruch 1, dadurch **gekennzeichnet,** daß die mit dem Fadenkreuz, Strichmuster oder Leuchtpunkt (11) versehene IR-transparente Platte (10) in einem staubdichten Fensterrahmen (20) angeordnet ist.

3. Anordnung nach den Ansprüchen 1 oder 2, dadurch **gekennzeichnet,** daß die Beleuchtung des Fadenkreuzes, Strichmusters oder Leuchtpunktes (11) durch eine breitbandige IR-Lichtquelle (12) über Filter (13, 14) der jeweils gewünschten Wellenlänge und Strahlumlenkungsanordnungen (13a, 14a) erfolgt.

4. Anordnung nach einem der vorhergehenden Ansprüche, dadurch **gekennzeichnet,** daß die Platte zur Vermeidung des Narziss-Effekts schräg zur optischen Achse liegt.

FIG. 1

FIG. 2

10 056